# DEMANDE DE BREVET EUROPEEN

(11) **EP 1 908 977 A1**
(43) Date de publication de la demande: **09.04.2008**
(21) Numéro de dépôt: 07301358.3
(22) Date de dépôt: 12.09.2007
(51) Int. Cl.: F16D 23/06

(54) **Dispositif de synchronisation pour boîte de vitesses manuelle ou robotisée**

(30) Priorité: 04.10.2006 FR 0654091
(71) Demandeur: RENAULT S.A.S., 92100 Boulogne Billancourt (FR)
(72) Inventeur: Garnier, Nicolas, 77680, Roissy en Brie (FR)

(57) **Abrégé**

Dispositif de synchronisation pour boîte de vitesses comprenant un moyeu fixé sur un arbre de la boîte, un baladeur (1) coulissant axialement sur le moyeu en direction d'un anneau de synchronisation (2)et d'un pignon (6) tournant fou sur l'arbre, le baladeur (1) portant à sa périphérie des premières dents de longueur supérieure (1a) qui rencontrent directement la denture (7) du pignon (6) sans avoir rencontré celle de l'anneau, et des deuxièmes dents (1b) de longueur inférieure qui rencontrent des dents (2a) de l'anneau de synchronisation (2) avant de rencontrer celles du pignon, caractérisé en ce que la denture (7) du pignon (6) présente des premières dents plus avancées (7a)en direction du baladeur, qui rencontrent les premières dents (1a) de celui-ci, et des deuxièmes dents (7b) moins avancées en direction du baladeur (1), qui rencontrent les deuxièmes dents (1b) de celui-ci.

## Description

La présente invention se rapporte à la synchronisation des vitesses sur une boîte de vitesses à arbres parallèles et à engrenages, manuelle ou robotisée.

Plus précisément, elle concerne un dispositif de synchronisation pour boîte de vitesses comprenant un moyeu fixé sur un arbre de la boîte et un baladeur coulissant axialement sur le moyeu en direction d'un anneau de synchronisation et d'un pignon tournant fou sur l'arbre, le baladeur portant sur sa circonférence intérieure, une denture circulaire. Cette denture comprend des premières dents de longueur supérieure qui rencontrent directement la denture du pignon, sans avoir rencontré celle de l'anneau, et des deuxièmes dents de longueur inférieure, qui rencontrent des dents de l'anneau de synchronisation avant de rencontrer celles du pignon.

Dans une phase particulière du passage de vitesses, dite phase de crabotage, où la denture du baladeur s'engage effectivement dans celle du pignon, il y a risque de choc entre les dents du baladeur et celles du pignon. Ces chocs, ou rebonds de denture, sont ressentis désagréablement par le conducteur sur la boule de son levier de vitesses, et qualifiés de « croquement ». Ils sont liés à la perte de vitesse du pignon par rapport au baladeur pendant la phase précédente, dite de « vol libre » du baladeur, entre la fin de synchronisation et le crabotage.

Plus la distance parcourue par le baladeur en vol libre est courte, moins le pignon fou perd de vitesse pendant le vol libre, plus le baladeur atteint rapidement le pignon fou, et moins les risques de rebonds de dentures sont importants. On cherche donc à réduire au maximum la distance parcourue, « en vol libre », par les dents du baladeur.

Une disposition particulière est illustrée par la publication FR 2 787 535. Cette disposition consiste à décaler axialement les entrées de dentures de baladeur sur deux niveaux. Un tel décalage permet de dissocier, sur le baladeur, les fonctions de synchronisation et de crabotage, et de raccourcir la phase de vol libre du baladeur, en réduisant le trajet de ses dents les plus avancées, jusqu'au pignon.

La présente invention vise à renforcer l'efficacité d'une telle disposition, en apportant un perfectionnement supplémentaire au synchroniseur concerné.

Elle prévoit à cet effet, que la denture du pignon présente des premières dents plus avancées en direction du baladeur, qui rencontrent les premières dents de celui-ci, et des deuxièmes dents moins avancées en direction du baladeur, qui rencontrent les deuxièmes dents de celui-ci.

Les dents les plus longues du baladeur assurent son crabotage sur les dents les plus avancées du pignon, tandis que ses dents les plus courtes sont spécialisées dans la synchronisation et l'accrochage du baladeur sur les dents les moins avancées du pignon fou.

Conformément à l'invention, on a donc des dents avec des fonctions distinctes, aussi bien sur le baladeur, que sur le pignon fou.

L'écart angulaire entre deux dents de crabotage (les dents les plus avancées) consécutives, du baladeur et du pignon fou, est plus important que dans l'art antérieur. Cette augmentation accroît la possibilité de pénétration des dents de crabotage du baladeur entre celles du pignon, et limite considérablement les risques de rebonds de denture.

D'autres caractéristiques et avantages de l'invention apparaîtront clairement à la lecture de la description suivante d'un mode de réalisation particulier de celle-ci, en liaison avec les dessins annexés, sur lesquels:
- la figure 1 montre un exemple de synchroniseur conforme à l'invention,
- la figure 2 est une vue de détail de la denture des crabots du pignon fou,
- les figures 3A et 3B sont des vues de détail des entrées de denture du baladeur,
- la figure 4 est une vue en perspective de l'anneau de synchronisation, et
- la figure 5 est une vue aplatie de l'ensemble des dentures du synchroniseur.

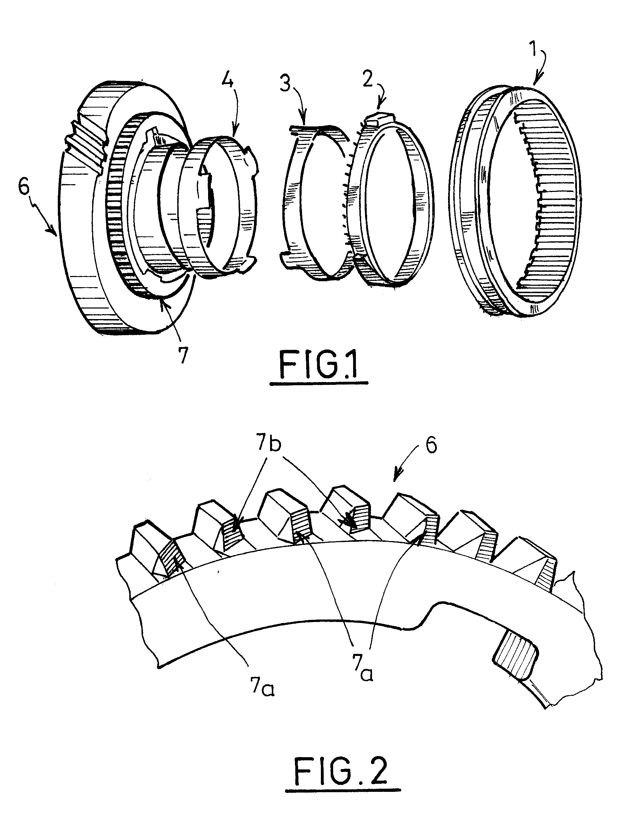

Sur la figure 1, on a représenté, en perspective éclatée, un synchroniseur illustrant un mode de réalisation non limitatif, de l'invention. Il s'agit d'un synchroniseur triple cône, dont les moyens de couplage, ou de synchronisation, comprennent un anneau supérieur 2, un anneau intermédiaire de friction 3, et un anneau de synchronisation inférieur 4. Le pignon fou 6 porte une denture de crabotage 7.

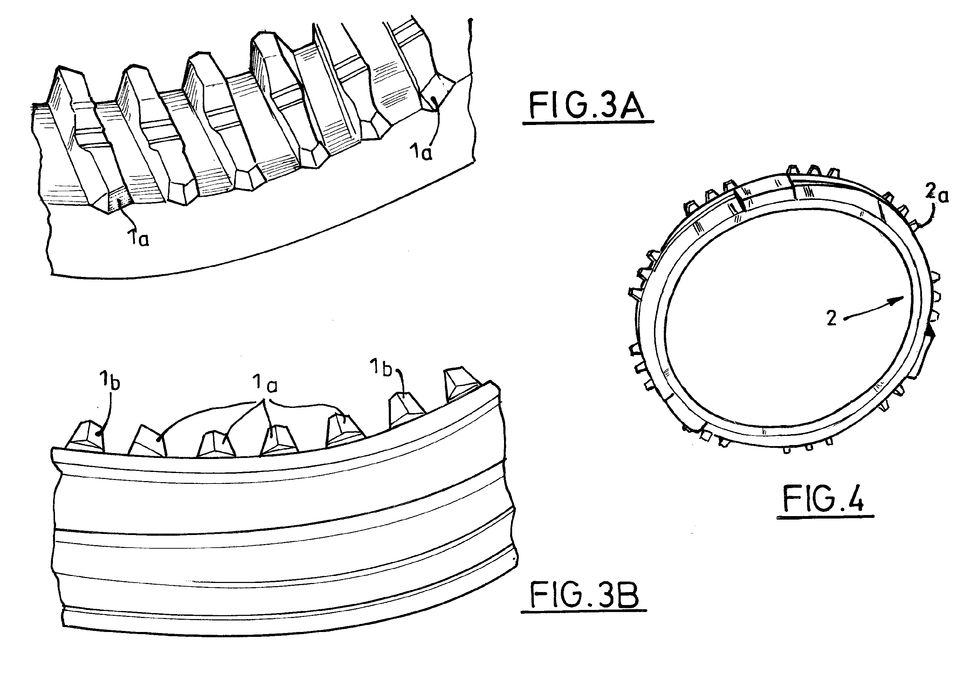

Cet exemple n'est pas limitatif, car l'invention trouve application sur tout synchroniseur, simple, ou triple cône, comprenant, comme celui de la figure 1, un moyeu fixé sur un arbre de la boîte (non représentés), un baladeur 1 coulissant axialement sur le moyeu en direction d'au moins un anneau de synchronisation 2 et d'un pignon 6 tournant fou sur l'arbre. Le baladeur 1 porte sur sa surface intérieure une denture circulaire (cf. figures 3A 3B). Des premières dents du baladeur 1a, de longueur supérieure, rencontrent directement la denture 7 du pignon 6, sans avoir rencontré celle de l'anneau 2. Des deuxièmes dents du baladeur 1b, de longueur inférieure, rencontrent des dents de l'anneau de synchronisation 2, avant de rencontrer celles du pignon 6.

La figure 2 met en évidence la présence de deux catégories de dents sur la denture 7 du pignon 6 : des premières dents 7a, plus avancées en direction du baladeur, qui rencontrent les premières dents 1a de celui-ci, et des deuxièmes dents 7b, moins avancées en direction du baladeur, qui rencontrent les deuxièmes dents 1b de celui-ci. Les premières dents 7a du pignon, les plus avancées vers le baladeur, assurent le crabotage du baladeur sur le pignon, et les deuxièmes dents 7b, moins avancées en direction du baladeur, assurent l'accrochage de celui-ci après le crabotage.

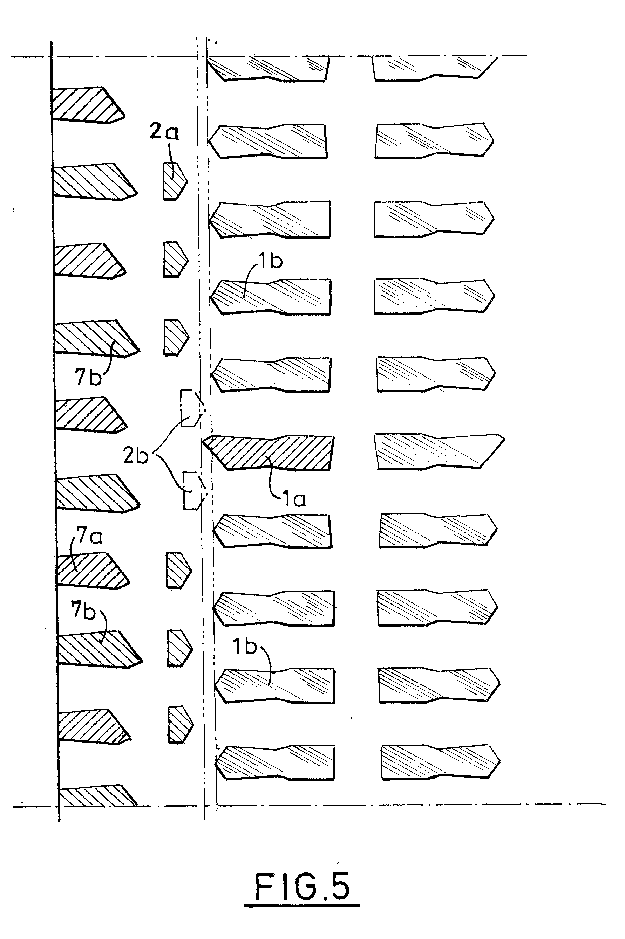

Sur la figure 2 et la figure 5, on voit que les premières et les deuxièmes dents 7a, 7b du pignon fou 6 sont régulièrement alternées autour de celui-ci. De plus, toutes les dents du baladeur 7a, 7b sont asymétriques, et les angles d'entrée de denture du pignon sont les mêmes sur les deux types dents 7a, 7b, pour conserver l'homogénéité des efforts de crabotage.

Les figures 3A et 3B, mettent en évidence des caractéristiques spécifiques du baladeur 1. On voit notamment que ses premières dents 1a (dents longues) sont séparées par trois deuxièmes dents 1b (dents courtes). Cette disposition n'est pas limitative, et on peut prévoir un nombre plus élevé de dents courtes entre deux dents longues, sans sortir du cadre de l'invention. Par ailleurs, on remarque que les premières dents la du baladeur sont « biseautées », c'est-à-dire asymétriques, alors que ses deuxièmes dents 1b sont symétriques.

Les premières dents du baladeur 1a, plus avancées en direction du pignon fou, et à entrées de denture asymétriques, rencontrent celui-ci sans avoir rencontré les anneaux de synchronisation. Elles sont spécialisées dans le crabotage du baladeur sur les dents les plus avancées 7a du pignon.

Les deuxièmes dents du baladeur 1b, à entrées de denture symétriques, assurent le contact avec les dents de l'anneau de synchronisation, pour la fonction synchronisation. Elles sont spécialisées dans la synchronisation et l'accrochage du baladeur sur les dents les moins avancées 7b du pignon fou.

La figure 4 montre des échancrures dans la denture de l'anneau de synchronisation 2. Ces échancrures correspondent à une suppression de dents sur l'anneau, dont l'emplacement 2b est représenté en pointillés sur la figure 5. L'invention prévoit de supprimer certaines dents sur l'anneau, pour garantir le non contact des dents de crabotage 1a du baladeur avec les dents 2a de l'anneau de synchronisation. Par contre, les dents de synchronisation 1b du baladeur sont en vis-à-vis des dents 2a de l'anneau.

Enfin, selon une autre caractéristique de l'invention, les angles d'entrées de dentures asymétrique peuvent avantageusement être les mêmes pour les dents 1a du baladeur, et pour celles 7a, 7b du pignon 6.

En conclusion, il faut souligner que la spécialisation des dents du pignon fou augmente l'intervalle angulaire entre les dents de crabotage du baladeur et du pignon. Cette augmentation facilite la pénétration des dents les unes à l'intérieur des autres, et évite le phénomènes de rebond de denture.

## Revendications

1. Dispositif de synchronisation pour boîte de vitesses comprenant un moyeu fixé sur un arbre de la boîte, un baladeur (1) coulissant axialement sur le moyeu en direction d'un anneau de synchronisation (2)et d'un pignon (6) tournant fou sur l'arbre, le baladeur (1) portant à sa périphérie des premières dents de longueur supérieure (1a) qui rencontrent directement la denture (7) du pignon (6) sans avoir rencontré celle de l'anneau, et des deuxièmes dents (1b) de longueur inférieure qui rencontrent des dents (2a) de l'anneau de synchronisation (2) avant de rencontrer celles du pignon, **caractérisé en ce que** la denture (7) du pignon (6) présente des premières dents plus avancées (7a)en direction du baladeur, qui rencontrent les premières dents (1a) de celui-ci, et des deuxièmes dents (7b) moins avancées en direction du baladeur (1), qui rencontrent les deuxièmes dents (1b) de celui-ci.

2. Dispositif de synchronisation selon la revendication 1, **caractérisé en ce que** les premières et les deuxièmes dents (7a, 7b) du pignon fou (6) sont régulièrement alternées autour de celui-ci.

3. Dispositif de synchronisation selon la revendication 1 ou 2, **caractérisé en ce que** les dents (7a, 7b) du pignon fou sont toutes asymétriques.

4. Dispositif de synchronisation selon la revendication 1, 2 ou 3, **caractérisé en ce que** l'anneau de synchronisation (2) présente des secteur sans dents permettant d'éviter tout contact entre les premières dents (1a) du baladeur et les dents (2a) de l'anneau.

5. Dispositif de synchronisation selon la revendication 4, **caractérisé en ce que** les secteurs sans dents de l'anneau (2) correspondent à au moins deux dents manquantes (2b) sur celui-ci.

6. Dispositif de synchronisation selon l'une des revendications précédentes, **caractérisé en ce que** les premières dents (1a) du baladeur sont séparées par au moins trois deuxièmes dents (1b).

7. Dispositif de synchronisation selon l'une des revendications précédentes, **caractérisé en ce que** les premières dents (1a) du baladeur sont asymétriques, alors que ses deuxièmes dents (1b) sont symétriques.

8. Dispositif de synchronisation selon l'une des revendications précédentes, **caractérisé en ce que** les premières dents (1a) du baladeur sont spécialisées dans le crabotage du baladeur sur les dents les plus avancées (7a) du pignon (6).

9. Dispositif de synchronisation selon l'une des revendications précédentes, **caractérisé en ce que** les deuxièmes dents (1b) du baladeur sont spécialisées dans la synchronisation, et l'accrochage du baladeur (1) sur les dents les moins avancées (7b) du pignon fou (6).

10. Dispositif de synchronisation selon l'une des revendications précédentes, **caractérisé en ce que** Les angles d'entrée de denture asymétriques sont les mêmes pour les dents (1a) du baladeur et pour celles (7a, 7b) du pignon (6).
